# EUROPEAN PATENT APPLICATION

(11) **EP 1 164 731 A2**
(43) Date of publication of application: **19.12.2001**
(21) Application number: 01304800.4
(22) Date of filing: 31.05.2001
(51) Int. Cl.: H04J 3/14, H04J 3/08

(54) **Method for protecting a digital communications system**

(30) Priority: 15.06.2000 IT TO200575
(71) Applicant: Marconi Communications SpA, 16153 Genova Cornigliano (IT)
(72) Inventor: Lazzeri, Francesco, 16049 Genova (IT)
(74) Representative: Collier, Ian Terry

(57) **Abstract**

In a method for effecting protection of a digital communications system having N communications units and K protection units, the protection units are initially set up by storing in memory in the protection units the configuration data relating to the communications units. Subsequently, when a fault occurs involving one of the communications units, it is only necessary for one of the protection units to be supplied with an indication of which communications unit is involved, upon which the protection unit accesses in memory the configuration data associated with that unit and uses those data as its own configuration data. By this means the protection unit assumes the role of the fault-related communications unit with very little delay. Once the fault has been rectified, the protection unit has its own configuration data restored and the fault-related communications unit is put back into service. The method is envisaged as finding major use in an SDH communications system employing a 1:N protection scheme.

## Description

The invention relates to a method for protecting a digital communications system having a number of protection and communications units, and in particular, but not exclusively, a method for protecting a digital communications system employing a 1:N protection scheme.

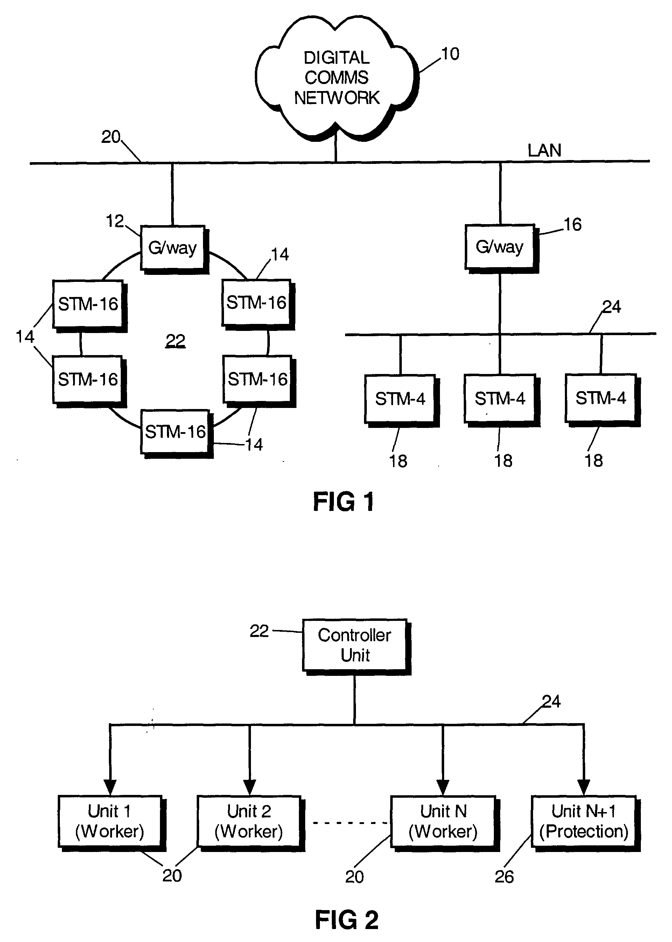

Telecommunications systems consist of a number of communications units which are connected to each other and/or to other systems by way of various network arrangements. A much simplified representation of a typical communications system is illustrated in Figure 1. In Figure 1 an SDH digital communications network 10 is connected to a number of communications units 12, 14, 16, 18 by way of a local area network (LAN) 20. The various units, which in turn are connected either to users ("hosts") or to other networks, are arranged in either a ring configuration 22 or along a bus 24 and one of the units 12, 16 in each case acts as a gateway device interfacing the other units to the LAN 20. In the illustrated arrangement the ring 22 comprises - purely as an example - STM-16 type units, while the bus 24 comprises STM-4 type units. Many other types of unit are possible, as would be appreciated by one skilled in the art.

In use, the communications system will provide for certain units to be selected in order to allow communication traffic to flow between one user and another. Such selection is part of a routeing process. To achieve this desired flow of traffic, the various units, which may also be termed "ports", will be configured or reconfigured very frequently during service.

Very often it is required that the system offer a high availability to the user, i.e. that the occurrence of a fault in a unit should not adversely affect the performance of the system. It is thus desirable to include in the communications system some form of protection arrangement which will help to achieve this. One known way of providing protection against the failure of a unit is to provide one or more so-called protection units to take over the place of the failed unit. This is illustrated in Figure 2, in which N units 20, which correspond for example to the STM units shown in Figure 1 and are commonly termed "worker" units, are under the control of a controller unit 22, which initially configures the units independently in terms of traffic-related port parameters - these parameters including frame structure, signal labelling, path trace, performance monitoring, alarm-consequent actions, signal-degrade thresholds, etc - and, when conditions change (e.g. a new port is configured, or some parameter is changed), updates the configuration data of the relevant units by way of a control bus 24. In addition, an extra unit 26 is provided - a so-called "protection" unit - which is also under the control of the controller unit 22. This additional unit, which in a ring environment such as the ring 22 in Figure 1 may take the form of an MS-SPRING (Multiple-Section Shared Protection Ring) device and in a bus environment such as the bus 24 in Figure 1 may be an MSP (Multiple-Section Protection) device, will take over from one of the other units 20, should it fail in service, though it may also be responsible for handling its own traffic during normal operation of the system. If the protection unit has its own traffic, it will normally be low-priority traffic which can tolerate the delay involved in being passed on to another unit or can even afford to be discarded, should a fault arise in a unit 20. The illustrated scheme is a so-called "1:N" scheme in which a sole protection unit serves N communication units.

The conventional way of handing over traffic to the protection unit when a worker unit - e.g. unit 1 - develops a fault is to reconfigure, through the controller unit, the protection unit with the configuration data of unit 1 existing at the moment of fault. The fault, incidentally, may be an event such as a hardware problem in the unit itself, a protocol command (e.g. a "manual switch to protection" command, a "forced switch to protection" command, a "lockout protection" command or a "clear" command) or a failure indication generated by a sensor, etc.). The controller unit in practice performs a complete reconfiguration of the protection unit, copying onto it via the bus 24 the configuration data of unit 1. Ideally, the time the controller unit takes to do this should be as short as possible, so that normal service can be resumed without noticeable degradation. This reconfiguration process takes the same time that the initial configuration of unit 1 took, which can be of the order of 50 ms using MSP or MS-SPRING devices for the protection unit. The main limitations are the power of the processor (not shown) in the controller unit, the bandwidth of the control bus 14, the efficiency of the protocol used over the control bus and the power of the processor in the protection unit 16.

In accordance with a first aspect of the invention, there is provided a method for effecting protection of a digital communications system involving a K:N protection scheme, as defined in Claim 1. Under a second aspect, the invention provides a K:N protection arrangement for a digital telecommunications system, as defined in Claim 14. Specific realisations of the invention are contained in the subclaims.

An embodiment of the invention will now be described, by way of example only, with reference to the drawings, of which:
Figure 1 is a simplified schematic diagram of a typical SDH communication system;
Figure 2 is a block diagram of a 1:N protection scheme which might be used in a communications system such as shown in Figure 1, and
Figures 3A to 3D are flow diagrams illustrating the mode of operation of a protection method in accordance with an embodiment of the present invention.

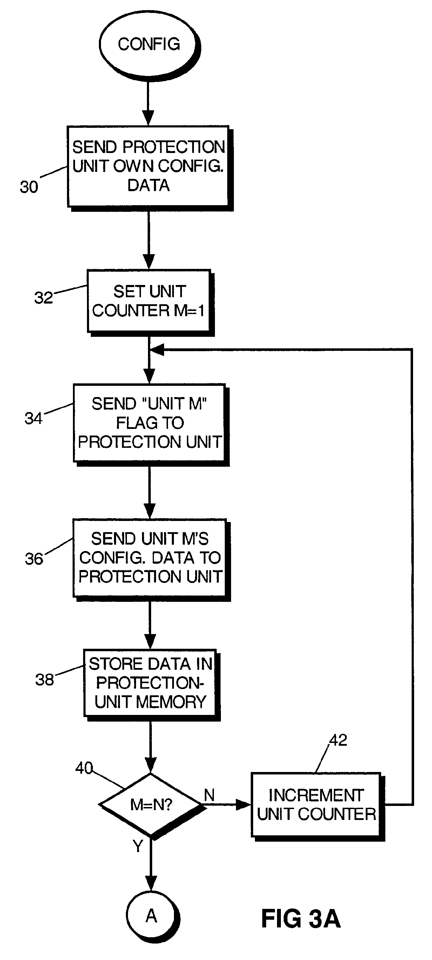

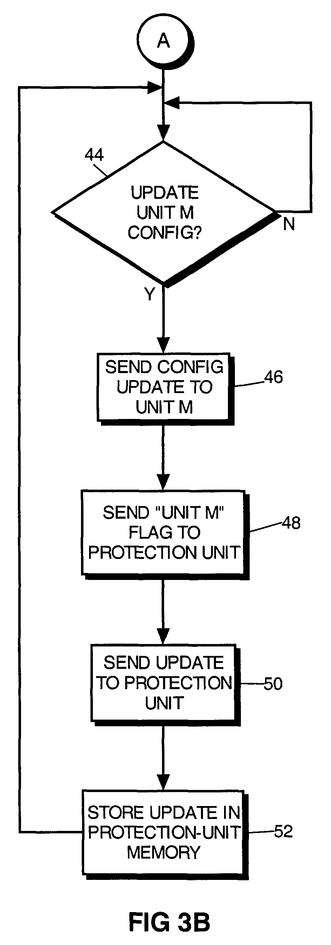

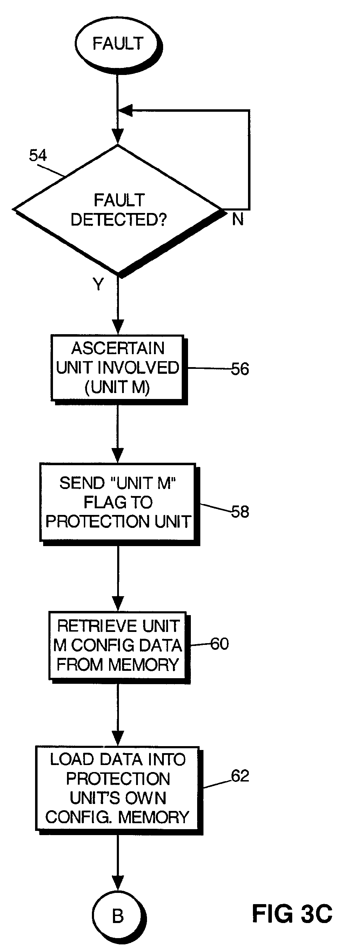

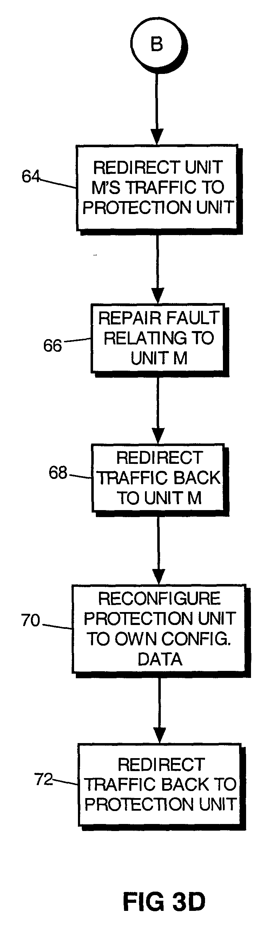

Referring now to the flow diagram, Figure 3, the known protection procedure outlined above is modified in a manner now to be described.

Initially, the protection unit in the communications system is subject to a configuration process shown in Figures 3A and 3B. In this process, and assuming the protection unit is to handle its own low-priority traffic, the controller unit 22 issues via the bus 24 the configuration data pertaining to the protection unit itself. Those data may include routeing data, quality-of-service data and frame structure data. This is shown as block 30 in Figure 3A. Following this, the protection unit is provided with the configuration data relating to the various non-protection units in the communications system, namely units 1 to N. In the illustrated flow diagram this is achieved by, firstly, setting a unit counter value M to 1 in block 32, sending to the protection unit in block 34 a flag indicative of the current value of M (one), then sending to the protection unit the configuration data for that same unit (block 36). These acts are carried out by the controller unit 22 over the bus 24. Finally, these data are stored in a protection-unit memory location dedicated to unit 1 (see block 38). The value of M is then (block 40) compared to the value N, which is the total number of communication units to be associated with the protection unit, and if the two values are not the same, the unit counter is incremented by one (block 42) and the operations of blocks 34 to 40 repeated until the configuration data for all the communication units is resident in respective memory locations in the protection unit. Thus the flags signal to the protection unit that it is to expect the configuration data for a particular worker unit, which the protection subsequently receives and stores away.

Once this has been achieved, the controller unit 22 is arranged to monitor the communications system for an indication that the configuration data for any one of the communication "worker" units 20 are to be updated. This will be required if there is a change in routeing or in quality of service, etc. This monitoring process is illustrated in block 44. Where updating has been requested, the particular update data are sent to the worker unit concerned (unit M, in general terms) (46) and a simple flag is sent to the protection unit (48) to alert it that the data of the relevant worker unit are about to change. The controller unit then sends to the protection unit in block 50 the relevant update data, which will normally be in the form of single commands, whereupon the protection unit stores the data in the relevant memory location for that worker unit (block 52). The update will normally, in practice, be a replacing of the existing data portion by the new data portion.

This process is repeated as often as required by the incoming update instructions. The issuing of a flag by the control unit simply ensures that the update data are directed into the correct memory area of the protection unit so that the correct configuration data are updated in that unit.

It is to be appreciated that, instead of setting the unit counter to 1 initially in block 32 of Figure 3A and then incrementing the counter, it is equally possible to set the counter initially to the value of N and subsequently decrement the counter until M=1, at which point the configuration setting process outlined in Figure 3A can give way to the updating process outlined in Figure 3B. Where this iteration method is employed, it is the configuration data of unit N which are stored first in the protection unit and the configuration data of unit 1 which are stored last. Other alternative ways of iterating around blocks 34-38 are possible, whereby for example the iteration-counting process is independent of the order in which the communications units' configuration data are sent to the protection unit. Thus, provided an accurate count of the number of configuration-data writing operations is kept, the data could be sent in any order (e.g. unit 1 followed by unit N followed by unit 2, etc), but it will generally be easier to arrange for the data to be sent in the strict consecutive sequence: unit 1, unit 2,...unit N or the reverse.

Where now one of the worker units 20 suffers a fault, it is an easy matter to instruct the protection unit to take over the function of that worker unit. This is pictured in Figures 3C and 3D. In block 54 of Figure 3C the controller unit or other device (see later) is shown as being on the alert for the occurrence of a fault. As soon as a fault is detected, it is ascertained to which worker unit the fault relates (block 56). The identity of that unit is passed on to the protection unit (block 58), which then accesses in its memory the configuration data relating to that unit and loads them into its own working memory (blocks 60, 62). If the protection unit is handling its own traffic, this is normally dropped altogether, especially where it is low-priority traffic, which is the usual situation. Finally, the traffic destined for unit M is routed to the protection unit (block 64). (In practice, block 64 could precede block 62.)

The result of this procedure is that the protection unit has now taken the place of the worker unit which has come out of service due to the fault.

All that remains now is for the relevant fault to be located and fixed (66), traffic to be redirected back to the unit which had been taken out of service (68) and finally the previously fault-related unit's configuration data to be overwritten in the protection unit's memory with the protection unit's own configuration data and the low-priority traffic to be reintroduced into the protection unit (blocks 70, 72). The actions specified in block 66 are carried out by service personnel, while the remaining actions are normally automatic.

It was mentioned earlier that it may be the controller unit which monitors the occurrence of a fault and sends the appropriate flag to the protection unit. While this is a possibility, it might equally be the faulty unit itself which sends the flag, either by way of the bus 24 or by different communication facilities available inside the equipment. Alternatively, depending on the nature of the fault, flagging may be carried out by a sensor which registers the appearance of a fault. It is significant here that, since all that is required is an indication of which unit is affected by the fault, the unit sending that indication does not have to be one which has an overall view of the communication system's configuration (e.g. the controller unit). This means that the flag can be sent more directly under some circumstances, with the result that protection switching can take place faster.

Speed of switching is, of course, also affected more fundamentally by the fact that only a single flag indication has to be sent to the protection unit in order to trigger the switching. Since the length of the flag is much shorter than the length of the full re-configuration data for any particular worker unit (the flag may be only a few bytes in size), response time will necessarily be shorter than in the prior-art protection method. In addition, switching time is now affected only by the power of the processor in the protection unit, not also by the power of the processor in the controller unit, as would be the case in the prior-art arrangement. The amount of power needed to manage the loading of the re-configuration data from the faulty unit's memory location in the protection unit into the traffic-configuration area of the protection unit is less than the power needed to get messages from the control bus, translate them and finally apply them within the protection unit.

A potential problem which might arise in a practical realisation of the invention is the risk that a flag might be sent to the protection unit at the very time it is being configured with the configuration data of its associated worker units. This could occur, for example, where the unit has previously been taken out of service for some reason (e.g. for repair) and has just been put back into service. In that event it is conceivable that, although it has received the flag, it is not yet ready to act on it, since it could not assume the new configuration relating to the faulty unit. In practice, care is taken that the firmware in the protection unit does not try to perform protection switching in these circumstances before the software has updated the protection unit's traffic-configuration settings to the faulty unit's settings. This firmware inhibition may be effected by the use of appropriate messages, such as "StartConfiguration" and "EndConfiguration" messages.

It is also conceivable that a second worker unit could be involved in a fault at roughly the same time as the first, i.e. before the first fault has been satisfactorily cleared. Under those circumstances the protection unit would be unable to serve the second fault, unless it was specifically instructed to drop the traffic of the first unit and take over the traffic of the second unit. That would depend on the priority rules of the particular protection scheme being used. In the absence of any specific priority rules, the protection unit would simply act on a "first come, first served" basis. Protection switching based on a priority scheme would require that the flag to be sent to the protection unit in order to trigger protection switching should be sent by the controller unit, or at least by a unit which had knowledge of the priority rules.

While the present protection method is envisaged mainly for use in SDH systems using 1:N protection, it is also applicable to other communication systems and to systems employing a K:N protection scheme. In the latter case each of the K protection units is loaded with the full configuration data of the N worker units with which it is associated and, under a priority scheme, one of the K protection units is sent the flag relating to the first faulty worker unit so that it can take over the traffic of that unit. Subsequent faults are handled in the same way by the rest of the K protection units.

## Claims

1. A method for effecting protection of a digital communications system having N independently configurable communications units (20) and K protection units (26) allocated to the N communications units, where 1 is less than or equal to K is less than or equal to N, the method comprising the steps of:
(a) in an initial setting-up stage for the protection units, supplying each of one or more of the protection units (26) with configuration data relating to the communications units (20) and storing said data in respective memory locations in the each protection unit;
(b) where so required, subsequently updating said data with update data relating to said communications units (20);
(c) in the event of a fault occurring involving one of the communications units, sending to one of the one or more of the protection units (26) an indication of which communications unit is involved in the fault, and
(d) causing that protection unit (26) to use said indication to identify the memory location associated with the fault-related communications unit and to use the configuration data in that memory location as its own configuration data, thereby to take over the role of that communications unit in the communications system.

2. Method as claimed in Claim 1, wherein said one or more of the protection units are low-priority-traffic carrying units and are supplied with their own configuration data.

3. Method as claimed in Claim 1 or Claim 2, wherein an identification flag is sent to the one or more of the protection units before the configuration-update data relating to the communications units are sent, in order to identify the particular communications unit to which the update data pertain.

4. Method as claimed in any one of the preceding claims, wherein said indication is sent to the protection unit by way of a controller unit which controls the configuring of the communications units.

5. Method as claimed in Claim 4, wherein said indication is sent to the protection unit from the controller unit by way of a bus.

6. Method as claimed in any one of Claims 1 to 3, wherein said indication is sent to the protection unit directly by the fault-related communications unit.

7. Method as claimed in any one of Claims 1 to 3, wherein the fault is detected by a sensor device and said indication is sent to the protection unit directly by the sensor device.

8. Method as claimed in any one of the preceding claims, wherein the configuration data associated with the communications units 1 to N are supplied to the one or more of the protection units in consecutive sequence from one of communications units 1 and N to the other of communications units 1 and N.

9. Method as claimed in any one of Claims 2 to 8, wherein, before the protection unit takes over the role of the fault-related communications unit in the communications system, the traffic previously associated with the protection unit is either diverted to a working communications unit or is discarded.

10. Method as claimed in Claim 9, wherein, after the protection unit has taken over the traffic of the fault-related communications unit, the fault which occasioned such taking over is rectified, the taken-over traffic is redirected back to the fault-related unit, the protection unit is provided with its own configuration data and traffic is again supplied to the protection unit.

11. Method as claimed in Claim 10, wherein, once the fault has been rectified, the fault-related communications unit is reconfigured with the configuration data currently required of that unit and these configuration data are sent to the one or more of the protection units.

12. Method as claimed in any one of the preceding claims, wherein K=1.

13. A K:N protection arrangement for a digital telecommunications system having N independently configurable communications (20) and K protection units (26) allocated to the N communications units (20), where 1 is less than or equal to K is less than or equal to N, wherein the arrangement comprises:
(a) a means for supplying one or more of the protection units (26) with configuration data relating to the communications units (20) and storing said data in said one or more of the protection units;
(b) a means for subsequently updating said data with update data relating to said communications units (20);
(c) a means for sensing the occurrence of a fault involving one of the communications units (20);
(d) a means for sending to one of the protection units an indication of which communications unit is involved in the fault, and
(e) a means for causing the protection unit to use said indication to access the configuration data associated with the fault-related communications unit and to use said configuration data as its own configuration data, thereby to take over the role of that communications unit in the communications system.

14. Protection arrangement as claimed in Claim 13, wherein K=1.

15. Protection arrangement as claimed in Claim 14, wherein the communications system is an SDH communications system.

16. A SDH communications system comprising the protection unit as claimed in any one of Claims 13 to 15
